# EUROPEAN PATENT APPLICATION

(11) **EP 1 885 132 A2**
(43) Date of publication of application: **06.02.2008**
(21) Application number: 07015104.8
(22) Date of filing: 01.08.2007
(51) Int. Cl.: H04N 7/36, H04N 7/46, H04N 7/26

(54) **Interpolation frame generating method and interpolation frame generating apparatus**

(30) Priority: 02.08.2006 JP 2006211197
(71) Applicant: Kabushiki Kaisha Toshiba, Minato-ku, Tokyo 105-8001 (JP)
(72) Inventor: Sato, Ko, c/o Int. Prop. Div., Tokyo 105-8001 (JP); Yamasaki, Masaya, c/o Int. Prop. Div., Tokyo 105-8001 (JP); Hirayama, Keiko, c/o Int. Prop. Div., Tokyo 105-8001 (JP); Yoshiomura, Hiroshi, c/o Int. Prop. Div., Tokyo 105-8001 (JP); Hamakawa, Yohei, c/o Int. Prop. Div., Tokyo 105-8001 (JP); Douniwa, Kenichi, c/o Int. Prop. Div., Tokyo 105-8001 (JP); Ogawa, Yoshihiko, c/o Int. Prop. Div., Tokyo 105-8001 (JP)
(74) Representative: Hoffmann, Klaus

(57) **Abstract**

A detecting process (12) includes calculating (Block 108) an absolute difference value between values of each pair of pixels located in same position in respective image blocks which are located in positions corresponding to each other on former and latter frames of the input frame images. A vector based on positions of a pair of blocks on the former and latter frames having minimum SAD indicating a cumulative sum value of the absolute difference values is selected as the motion vector. When the absolute difference value is larger than a predetermined value, the difference value is changed (Block 104), and a possibility of erroneous detection of motion vector is reduced.

## Description

This invention relates to a technique of generating and inserting an interpolation frame between frame images forming moving images, and displaying movement of an object as smooth and natural movement.

When moving images are displayed on a liquid crystal display (LCD), the LCD displays frame images (hereinafter simply referred to as "frames") at a rate of, for example, 60 frames/second. The frames are sequential scanning images obtained by processing interlace signals of 60 fields/second. Specifically, hold-type display devices such as LCDs display one frame for 1/60 second.

When such images are viewed, an image of prior frame is left as persistence of vision for viewer's eyes. Therefore, there are cases where a moving object in the images appears blurred, or movement of the object appears unnatural. Such a phenomenon appears more conspicuously in larger screens.

To prevent such blurring of moving images, there is a known method of displaying moving images by inserting an interpolation frame between two sequential frames (refer to Jpn. Pat. Appln. KOKAI Pub. No. 2005-6275). In this method, matching of image blocks forming frames is performed between two input frames including a former frame and a latter frame or more input frames, and thereby a motion vector of each block (direction and distance of movement of the object) is detected. A new interpolation frame located between the input frames is generated by using the motion vector of each block. The interpolation frame is inserted between the two input frames, and thereby moving images are displayed with increased number of frames.

The above block matching is a method of comparing images block in former and latter frames, to detect which image block in the latter frame an image block of a predetermined size in the former frame matches. A difference between a pixel of one image block in the former frame and a corresponding pixel of each image block in the latter frame is calculated, and an image block of the latter frame having minimum cumulative value of difference (SAD: Sum of Absolute Difference) is detected as an image block which is most similar to the image block of the former frame. A difference of position between the most similar blocks of the former frame and the latter frame is detected as a motion vector.

When movement of an object is estimated based on block matching using SAD as described above, if a periodical pattern exists in input frames and movement of the object (periodical pattern) includes a component of slight phase shift smaller than the pixel precision, there are cases where a vector is erroneously detected.

Therefore, the object of the present invention is to prevent reduction in detection accuracy due to very minute movement (phase shift) of input images, in motion vector detection for generating an interpolation frame.

According to an aspect of the present invention, an interpolation frame generating method of generating an interpolation frame located between input frame images by using the input frame images comprises: detecting a motion vector of an object in the frame images by block matching processing between the input frame images; and generating the interpolation frame by using the detected motion vector, and inserting the interpolation frame between the input frame images, wherein the detecting includes: calculating an absolute difference value between values of each pair of pixels located in same position in respective image blocks which are located in positions corresponding to each other on former and latter frames of the input frame images, and detecting a vector based on positions of a pair of blocks on the former and latter frames having minimum SAD indicating a cumulative sum value of the absolute difference values as the motion vector; and changing the absolute difference value when the absolute difference value is larger than a predetermined value, and thereby reducing a possibility of erroneous detection of motion vector in the detecting.

The present invention prevents reduction in detection accuracy due to very minute movement (phase shift) of input images, in motion vector detection for generating an interpolation frame.

The invention can be more fully understood from the following detailed description when taken in conjunction with the accompanying drawings, in which:
FIG. 1 is a block diagram illustrating an embodiment of an interpolation frame generating apparatus according to the present invention.
FIG. 2 is a diagram for explaining an example of block matching processing.
FIG. 3 is a diagram illustrating a state where an object 30 in a former frame 20 is located in a position of a latter frame 22, moving by 10 pixels in the horizontal direction from the position thereof in the former frame 20.
FIG. 4 is a graph showing relationship between the shift amount of image block and SAD in block matching processing.
FIG. 5 is a diagram illustrating a state of block matching processing performed when a periodical pattern 31 on the former frame 20 moves by 0.5 pixels in the horizontal direction during a period of 1 frame.
FIG: 6 is a flowchart illustrating operation of a motion vector detecting section 12 illustrated in FIG. 1.
FIG. 7 is a diagram illustrating pattern matching processing performed for a periodical pattern 32 whose pixel value gradually changes.
FIG. 8 is a diagram illustrating another block matching processing.
FIG. 9 is a flowchart illustrating motion vector detection processing using the block matching processing of FIG. 8.

An embodiment of the present invention is described below with reference to drawings.

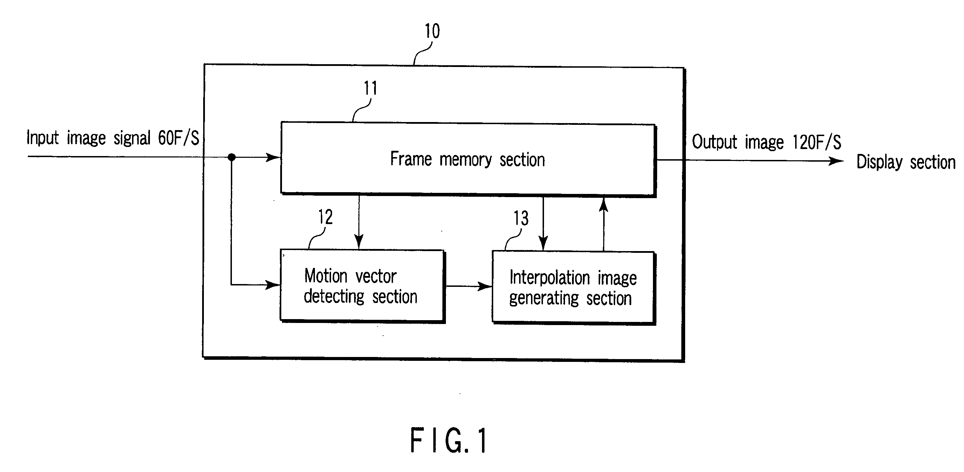

FIG. 1 is a block diagram illustrating an embodiment of an interpolation frame generating apparatus (frame number changing apparatus) according to the present invention.

An interpolation frame generating apparatus 10 includes a frame memory section 11, a motion vector detecting section 12, and an interpolation image generating section 13. The motion vector detecting section 12 detects a motion vector from, for example, sequential two frames in an input image signal by block matching processing. A frame rate of input image signals is, for example, 60 frames/second.

The interpolation image generating section 13 generates an interpolation frame on the basis of a detection result of the motion vector detecting section 12, and inserts the interpolation frame between the two frames. A frame rate of an output image signal, in which interpolation frames are inserted, is 120 frames/second, for example. The image signal is subjected to image processing such as amplification and filtering, and thereafter displayed on a display section such as an LCD. The motion vector detecting section 12 and the interpolation image generating section 13 can be formed of hardware using individual electronic circuits, or software which is run by CPU (not shown).

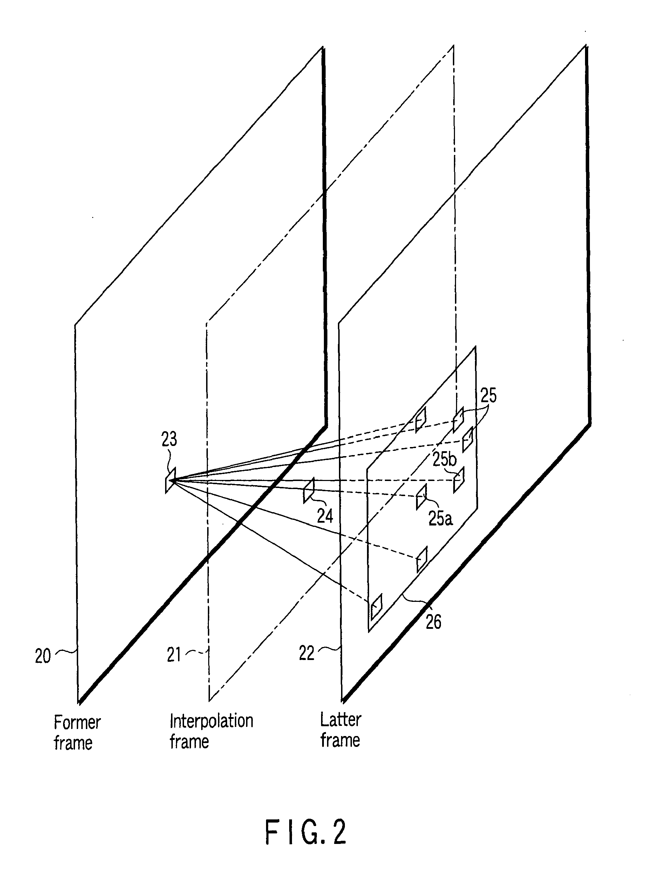

FIG. 2 is a diagram for explaining an example of block matching processing.

A former frame 20 and a latter frame 22 are frames which are sequentially input. An observed image block 23 in the former frame 20 is compared with each image block 25 in a search range 26 in the latter frame 22. The search range 26 is a region of a predetermined size. An image block 25a located in a position in the latter frame 22 corresponding to the position of the observed image block 23 in the former frame 20 serves as the center of the search range 26. A vector connecting the observed image block 23 with an image block (image block 25b in this example) having an image most similar to the image of the observed image block 23 in the search range 26 is determined as a motion vector of the observed image block 23. The motion vector (including size and direction) is a vector indicated in two dimensions on a frame in actual processing, although it is shown in three-dimensional form in FIG. 2 for explanation's sake.

Similarity of image blocks are determined by obtaining an absolute difference value between pixel values of pixels which are located in the same position in the observed image block 23 and each image block 25 for each of pixels in the image block, and obtaining a sum of the absolute difference values (SAD). The image block 25b in which the SAD has a minimum value is determined as an image block most similar to the observed image block 23. A vector from the observed image block 23 to the image block 25b is determined as a motion vector of the observed image block 23 as described above. An interpolation image block 24 in an interpolation frame 21 is generated on the basis of the motion vector and image data of the observed image block 23 and the image block 23b. Although this embodiment shows a method of generating an interpolation frame by detecting a motion vector for two sequential frames, an interpolation frame may be generated by detecting a motion vector using three or more frames.

Operation of block matching processing by the motion vector detecting section 12 is described in detail below.

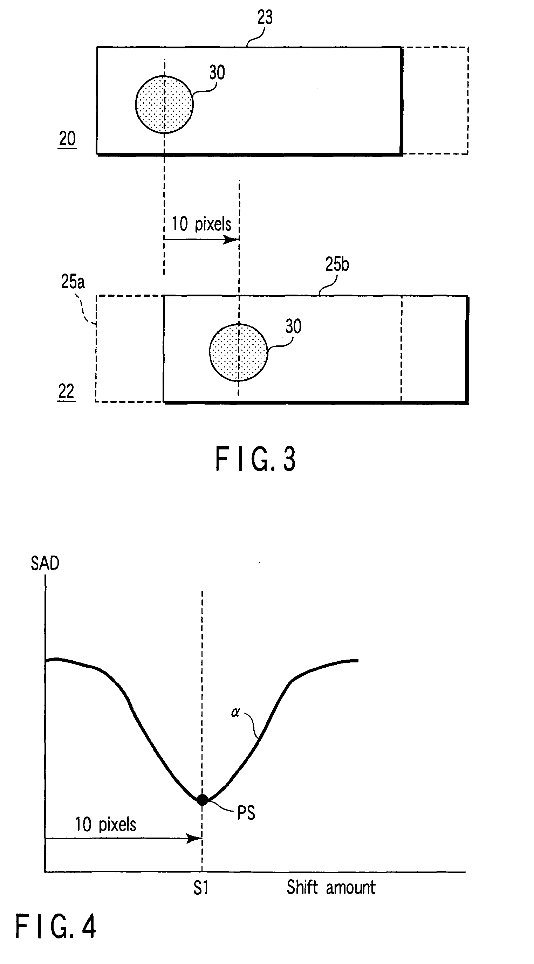

FIG. 3 illustrates a state where an object 30 in the former frame 20 moves by 10 pixels in the horizontal direction and is located in the latter frame 22. FIG. 4 is a graph illustrating relationship (SAD characteristic) between the shift amount of an image block and SAD in block matching processing. The block matching processing is performed by the motion vector detecting section 12. Although only horizontal block matching processing is explained to simplify explanation, actually block matching processing is performed in the horizontal direction and the vertical direction as illustrated in FIG. 2.

In this example, when the observed image block 23 including the object 30 in the former frame 20 is shifted in increments of 1 pixel from the position of the center image block 25a in the search range of the latter frame 22, SAD has a minimum value as illustrated in FIG. 4 in a position where the image block 23 is shifted by 10 pixels. A motion vector is detected based on the shift amount S1 of the minimum point PS and a direction thereof. Specifically, the minimum point PS illustrates a motion vector. In this example, the motion vector of the observed image block 23 is detected as a vector of horizontal direction and +10 pixels.

As a result, an image block obtained by shifting the observed image block 23 by 5 pixels in the horizontal direction from a corresponding position in the interpolation frame is generated as an image block in the interpolation frame. The motion vector (shift amount S1 and the direction thereof) detected as described above indicates the position of the image block 25b in the search range 26. As described above, the value of SAD has only one minimum point (smallest value) in a direction (shift amount) of a vector, in general natural images.

When movement of an object is detected based on the above block matching using SAD, there are cases where a motion vector is erroneously detected, if a periodical pattern exists in input frames and movement of the object (periodical pattern) includes a component of slight phase shift smaller than pixel precision.

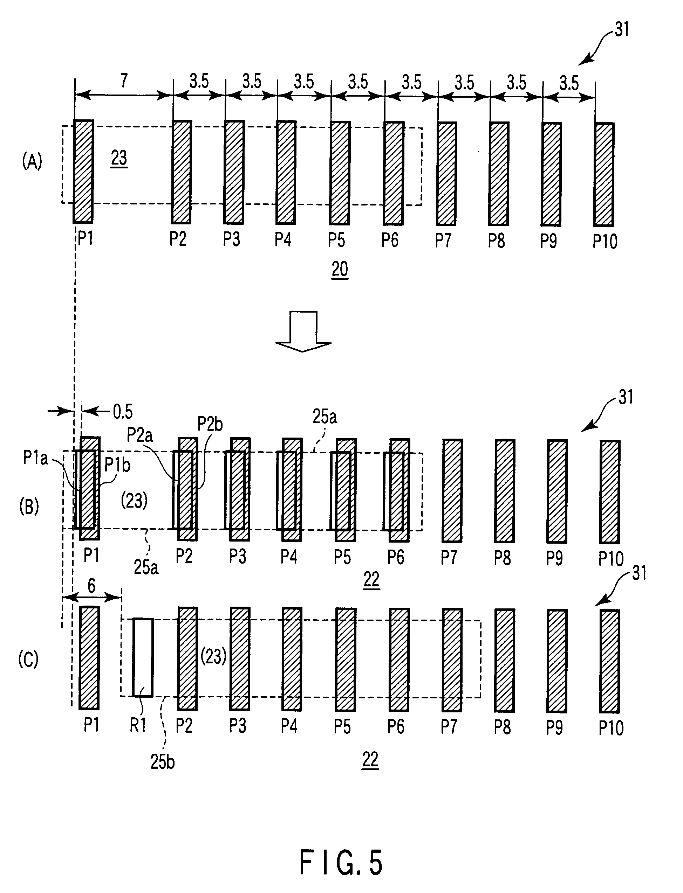

FIG. 5 illustrate a state where a periodical pattern 31 on the former frame 20 moves by 0.5 pixels in the horizontal direction during a period of 1 frame, and displayed on the latter frame 22. As illustrated in FIG. 5(A), the periodical pattern 31 includes pattern elements P1 to P10. Suppose that the pitch between the pattern elements P1 and P2 is, for example, 7 pixels, and the pitch between adjacent pattern elements of pattern elements P2 to P10 is 3.5 pixels. The image block 23 spreads over pattern elements P1 to P6.

FIG. 5(B) illustrates a state where the periodical pattern 31 moves by 0.5 pixels in the horizontal direction, and subjected to block matching in the position of a block 25a (shift amount 0) on the latter frame 22 by using image data of the image block 23. In this case, on both sides of each of pattern elements P1 to P6, there are regions such as P1a and P1b of pattern element P1 and P2a and P2b of pattern elements P2, in which difference between the pixel value of the image block 23 and the pixel value of the image block 25a occurs. Therefore, SAD in this case is SAD1 which is a value obtained by adding absolute values of the differences generated on both sides of each pattern element P1 to P6 (??to SAD??).

FIG. 5(C) illustrates a state in which block matching is performed by moving the image block 23 on the latter frame 22 by 6 pixels in the horizontal direction to the position of the image block 25b. In this case, the phases of the pattern elements P3 to P7 accurately match the phases of the pattern elements in the image block 23, and there are no regions having difference between pixel values as in FIG. 5(B) around the pattern elements P3 to P7. However, a difference between pixel values occurs in a region close to the leftmost portion of the image block 25b, such as region R1. Therefore, SAD is SAD2 which is a value obtained by adding only absolute value of the differential value in the region R1.

If SAD2 obtained on the basis of only differential value in the region R1 by shifting the image block 23 by 6 pixels as in FIG. 5(C) is smaller than SAD1 obtained with 0 shift amount as in FIG. 5(B), it is determined that the periodical pattern 31 has moved by 6 pixels in the horizontal direction. Specifically, erroneous detection of motion vector occurs.

Each differential value in regions such as differential regions P1a and P1b in which phases are slightly shifted between pattern elements as in FIG. 5(B) is smaller than each differential value in regions such as region R1 of FIG. 5(C) in which the pattern elements do not overlap at all. This is because each pixel value in the regions such as P1a and P1b in the latter frame 22 is an intermediate value of a pixel in the pattern element and a background pixel due to movement of 0.5 pixels.

In prior art, to deal with cases where an object in images includes minute movement smaller than a pixel unit, there are cases where a virtual pixel is generated with a pixel unit of 1/2, 1/4, or 1/8 pixel by filtering between pixels of an input actual image (shift blocks in the former frame by 1/2, 1/4, or 1/8 pixel), and movement amount is detected in smaller unit by using the virtual pixel. However, this method of using virtual pixels causes the problem that processing amount rapidly increases as pixel precision is increased, and the actual limit of the precision which can be used in the method is about 1/2 pixel.

However, actual input images often include minute movement with a scale of 1/2 pixel or less. Therefore, in the above conventional method cannot deal with these minute phase shifts, and causes erroneous detection of motion vector and deterioration in quality of an interpolation frame.

The above problem occurs when a cumulative error value generated by minute phase shifts such as P1a and P1b of FIG. 5(B) is larger than a cumulative error value in one (or more under certain circumstances) element P of the periodical pattern like the region R1 of FIG. 5(C), in an image including a periodical pattern. The present invention performs processing to avoid selecting a motion vector of a direction including a differential value in one pixel which is larger than a predetermined value. Thereby, even if a minute phase shift exists, movement of a correct direction can be detected, and the above problem is solved. Motion vector detection processing according to the present invention is explained below in detail.

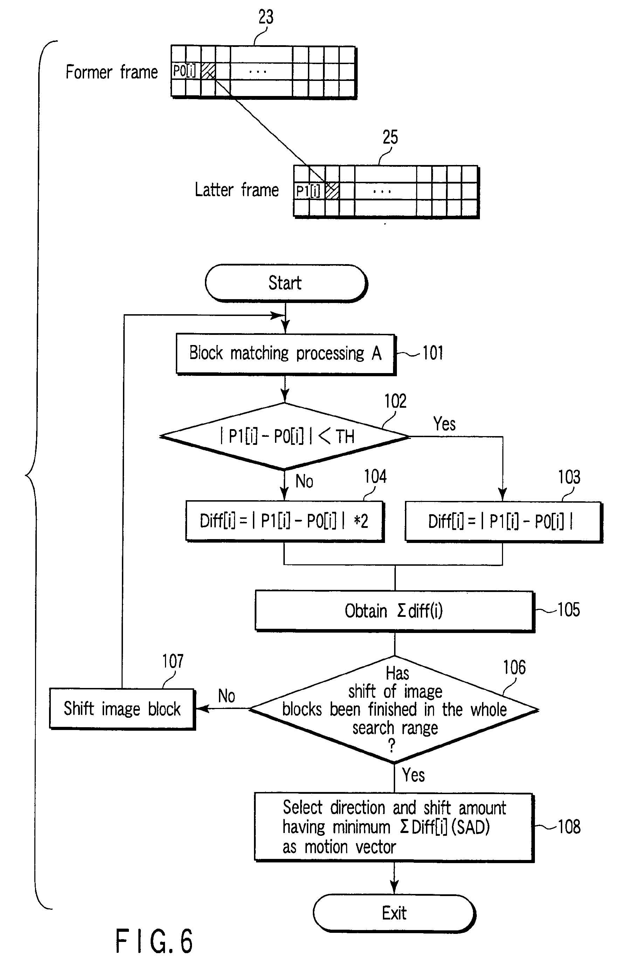

FIG. 6 is a flowchart illustrating operation of the motion vector detecting section 12 of FIG. 1.

The motion vector detecting section 12 determines an observed image block 23 in the former frame and an image block 25 in the search range 26 of the latter frame, in block matching processing A illustrated in FIG. 2 (Block 101). The motion vector detecting section 12 determines whether an absolute difference value between pixel values of pixels which are located in the same position in the observed image block 23 and the image block 25 is smaller than a predetermined threshold value TH (Block 102). When the absolute difference value is smaller than the predetermined threshold value TH (YES of Block 102), the absolute difference value is used as Diff (i). If the absolute difference value is larger than the predetermined threshold TH (NO of Block 102), the absolute difference value is changed to a larger value (Block 104). For example, a value obtained by multiplying the absolute difference value by 2 is used as Diff (i). The motion vector detecting section 12 determines values Diff (i) in the whole area of the image block, and obtains a cumulative sum value (ΣDiff(i)) of the values Diff(i) as SAD (Block 105).

Next, the motion vector detecting section 12 determines whether shift of image blocks has been finished in the whole search region (Block 106). If it has not been finished, the motion vector detecting section 12 moves an image block by 1 pixel (Block 107), and returns to Block 101. If shift of image blocks has been finished in the whole search region, the motion vector detecting section 12 selects a direction and a shift amount having a minimum cumulative sum value (ΣDiff(i)) as a motion vector, and adopts the motion vector for generating an interpolation image (Block 108). Thereby, a motion vector is determined.

The following is explanation of another example of the processing of changing the absolute difference value in Block 104. A number by which the absolute difference value exceeding the predetermined threshold TH multiplied is not limited to 2 as in Block 104 of FIG. 6, but may be another numerical value, such as a power of 2. Further, a predetermined number may be added to a differential value exceeding the predetermined threshold TH. Further, the absolute difference value may be compared with a plurality of levels, and a power of 2 by which the absolute difference value may be changed according to the level to which the absolute difference value corresponds. For example, if the absolute difference value exceeds the predetermined threshold TH and falls within a range from TH to another threshold value larger than TH, the absolute difference value is multiplied by 2. If the absolute difference value is larger than the larger threshold value, the absolute difference value is multiplied by 4 (the second power of 2). In the same manner, the processing can be performed such that a first predetermined value is added to the absolute difference value if the absolute difference value exceeds the predetermined threshold value TH and is included in a range from TH to another threshold value larger than TH, and a second predetermined value larger than the first predetermined value is added to the absolute difference value if the absolute difference value is larger than the larger threshold value.

As described above, the above embodiment of the present invention obtains a pixel value difference between pixels which are located in the corresponding positions of respective image blocks compared with each other in block matching. If an absolute value of the pixel value difference is larger than a predetermined threshold value, it is determined that a clear difference exists, and the absolute difference value is converted into a larger value by multiplying the value by, for example, 2. Therefore, SAD of an image block including a pixel in which a clear difference exists becomes larger than a normal value, and become less prone to have a minimum value. Consequently, the shift amount and direction of such an image block become less prone to be selected as a motion vector. Specifically, the absolute difference value of a pixel which is determined as having a clear difference is changed to a larger value, and thereby it is possible to reduce the possibility of erroneous detection of motion vector in selection processing as in Block 108. Therefore, according to the present invention, movement of a correct direction can be detected even if minute phase shift exists.

Next, explained is motion vector detection performed when a periodical pattern has gradation.

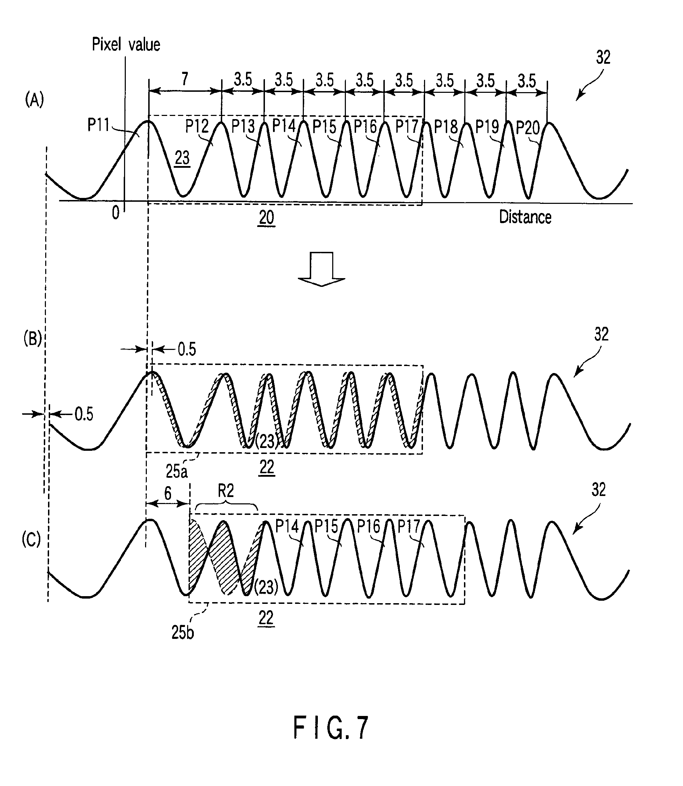

FIG. 7 is a diagram illustrating pattern matching processing performed for a periodical pattern 32 whose pixel value gradually changes. Also in this example, explained is the case where an image block is shifted in the horizontal direction. In FIG. 7(A), the horizontal axis indicates distance (shift amount), and the vertical axis indicates pixel value. The pitches between pattern elements P11 to P20 of the periodical pattern 32 are the same as those of the pattern elements P1 to P10 of FIG. 5.

Like FIG. 5(A), FIG. 7(A) illustrates a periodical pattern 32 on the former frame 20 is displayed on the latter frame 22. The image block 23 on the former frame 20 spreads over the pattern elements P11 to P17.

FIG. 7(B) illustrates a state where the periodical pattern 32 is moved by 0.5 pixels in the horizontal direction, and subjected to block matching in the position (shift amount 0) of the block 25a on the latter frame 22 by using image data of the image block 23. In this case, a difference between the pixel value (dotted line) of the image block 23 and the pixel value of the periodical pattern occurs in the whole area of the image block 25a, as indicated by hatch lines. Therefore, SAD in this case is SAD3 being a value obtained by adding absolute values of differences occurring through the whole area of the image block 25a.

FIG. 7(C) illustrates a state where the image block 23 is moved on the latter frame 22 by 6 pixels in the horizontal direction to the position of the image block 25b, and block matching is performed. In this case, phases of the pattern elements P14 to P17 accurately match phases of corresponding pattern elements in the image block 23, and pattern elements P14 to P17 have no regions where a difference between pixel values occurs as in FIG. 7(B). However, difference between pixel values occurs in the leftmost region of the image block 25b, such as region R2. Therefore, SAD in this case is SAD4 which is a value obtained by adding only an absolute value of a differential value in the region R2.

In prior art, if SAD4 obtained on the basis of only a differential value in the region R2 by shifting the image block 23 by 6 pixels as in FIG. 7(C) is smaller than SAD3 obtained with shift amount 0 as in FIG. 7(B), it is determined that the periodical pattern 32 is moved by 6 pixels in the horizontal direction. In other words, erroneous detection of motion vector occurs.

However, according to the present invention, as in the motion vector detection processing illustrated in FIG. 6, if the absolute value of a pixel value difference is larger than a predetermined threshold, it is determined that a clear difference occurs, and the absolute difference value is converted into a larger value by being multiplied by 2, for example. This reduces the possibility of erroneous detection of motion vector in selection processing as in Block 108.

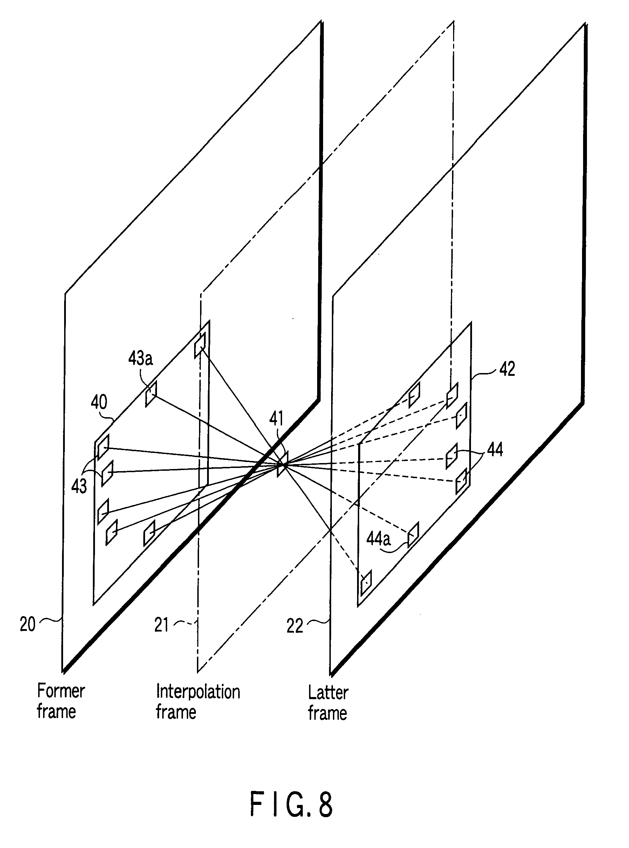

Next, another method of block matching processing is explained. FIG. 8 is a diagram illustrating another block matching processing B.

In addition to the method of FIG. 2 in which SAD is determined by simply shifting an image block of a former frame in a latter frame, there is a method of detecting a motion vector using block matching, in which a motion vector is determined by performing block matching processing of image blocks which are symmetric about a point, as illustrated in FIG. 8.

Specifically, in the method of FIG. 8, SAD is calculated by comparing image blocks of the former frame 20 with image blocks of the latter frame 22 pixel by pixel, which are symmetrical with respect to a point where an interpolation image block 41 is inserted in the interpolation frame 21. A vector connecting image blocks which are most similar to each other (which have the smallest SAD) is determined as motion vector. This comparison is performed in a predetermined search range 40 in the former frame 20 and in a corresponding search range 42 in the latter frame 22.

Supposing that a pair of most similar image blocks is, for example, an image block 43 and an image block 44, a vector from the image block 43 to the image block 44 is determined as a motion vector of the interpolation image block 41. The interpolation image block 41 is generated in the interpolation frame 21, on the basis of the motion vector and image data of the most similar image blocks 43 and 44.

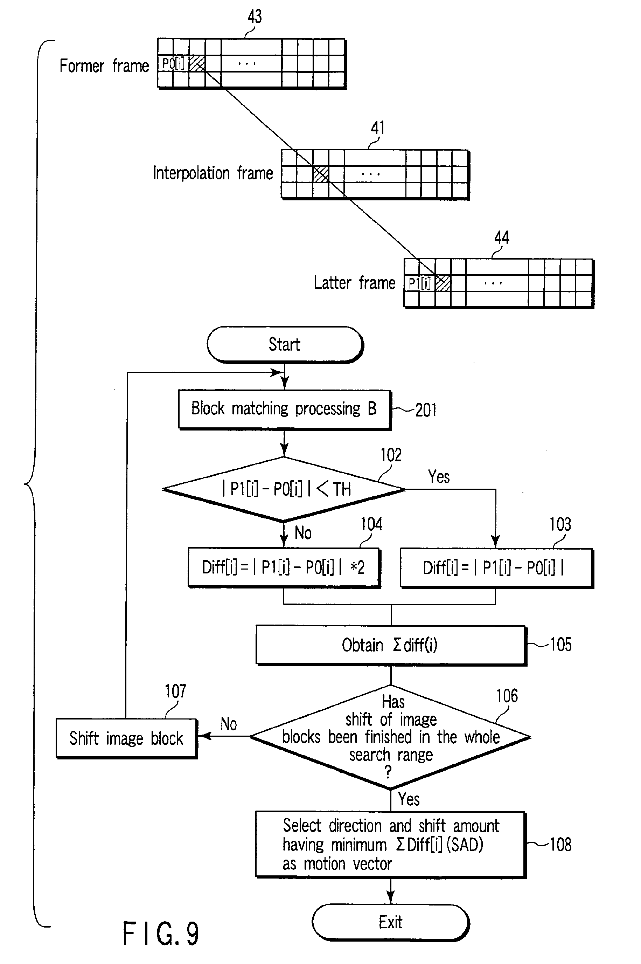

FIG. 9 is a flowchart illustrating motion vector detection processing using the block matching processing B illustrated in FIG. 8. The processing illustrated in the flowchart is the same as the motion vector detection processing of FIG. 6, except for Block 201 in which the block matching processing B is performed. Therefore, detailed explanation thereof is omitted.

As described above, according to the embodiment of the present invention, it is possible to prevent reduction in motion vector detection accuracy due to very minute movement (phase shift) of input images.

The above explanation relates to an embodiment of the present invention, and does not limit the apparatus and method of the present invention. Various modifications of the present invention can be easily performed.

## Claims

1. An interpolation frame generating method of generating an interpolation frame located between input frame images by using the input frame images, **characterized by** comprising:
detecting (12) a motion vector of an object in the frame images by block matching processing between the input frame images; and
generating (13) the interpolation frame by using the detected motion vector, and inserting the interpolation frame between the input frame images,
wherein the detecting (12) includes:
calculating (Block 108) an absolute difference value between values of each pair of pixels located in same position in respective image blocks which are located in positions corresponding to each other on former and latter frames of the input frame images, and detecting a vector based on positions of a pair of blocks on the former and latter frames having minimum SAD indicating a cumulative sum value of the absolute difference values as the motion vector; and
changing (Block 104) the absolute difference value when the absolute difference value is larger than a predetermined value, and thereby reducing a possibility of erroneous detection of motion vector in the detecting.

2. An interpolation frame generating method according to claim 1, **characterized in that**
the changing (Block 104) the absolute difference value includes changing the absolute difference value to a value larger than the absolute difference value.

3. An interpolation frame generating method according to claim 1, **characterized in that**
the changing (Block 104) the absolute difference value includes multiplying the absolute difference value by a power of 2.

4. An interpolation frame generating method according to claim 1, **characterized in that**
the changing (Block 104) the absolute difference value includes adding a predetermined value to the absolute difference value.

5. An interpolation frame generating method according to claim 3, **characterized in that**
the changing (Block 104) the absolute difference value includes comparing the absolute difference value with a plurality of levels, and changing the power of 2 according to a level to which the absolute difference value corresponds.

6. An interpolation frame generating method according to claim 4, **characterized in that**
the changing (Block 104) the absolute difference value includes comparing the absolute difference value with a plurality of levels, and changing the predetermined value added to the absolute difference value according to a level to which the absolute difference value corresponds.

7. An interpolation frame generating method according to claim 1, **characterized in that**
the inserting the interpolation frame includes displaying an image obtained by inserting the interpolation frame between the input frame images.

8. An interpolation frame generating apparatus which generates an interpolation frame located between input frame images by using the input frame images, **characterized by** comprising:
a vector detecting unit (12) which detects a motion vector of an object in the frame images by block matching processing between the input frame images; and
an inserting unit (13) which generates the interpolation frame by using the detected motion vector, and inserts the interpolation frame between the input frame images,
wherein the vector detecting unit (12) includes:
a calculating section (Block 108) which calculates an absolute difference value between values of each pair of pixels located in same position in respective image blocks which are located in positions corresponding to each other on former and latter frames of the input frame images, and detects a vector based on positions of a pair of blocks on the former and latter frames having minimum SAD indicating cumulative sum value of the absolute difference values as the motion vector; and
a section (Block 104) which changes the absolute difference value when the absolute difference value is larger than a predetermined value, and thereby reduces a possibility of erroneous detection of motion vector in the calculating section.
